# EUROPÄISCHE PATENTANMELDUNG

(11) **EP 2 703 921 A1**
(43) Veröffentlichungstag der Anmeldung: **05.03.2014**
(21) Anmeldenummer: 12181894.2
(22) Anmeldetag: 27.08.2012
(51) Int. Cl.: G05B 19/409

(54) **Verfahren zur Steuerung einer Maschine mittels einer Bedieneinheit**

(71) Anmelder: Siemens Aktiengesellschaft, 80333 München (DE)
(72) Erfinder: Jöhnßen, Oliver, 91058 Erlangen (DE)

(57) **Zusammenfassung**

Die Erfindung beschreibt ein Verfahren zur Steuerung einer Maschine (10) mittels einer Bedieneinheit (11), bei dem ein Steuerbefehl, der von der Bedieneinheit (11) an die Maschine (10) übertragen wird, durch die Maschine (10) ausgeführt wird, wenn sich die Bedieneinheit (11) bei der Übertragung des Steuerbefehls in einem vorgegebenen Bereich (25) relativ zu der Maschine (10) befindet. Eine Bestimmung des Orts der Bedieneinheit (11) erfolgt relativ zu der Maschine (10) mittels einer Kommunikation, die zwischen zumindest einer optischen Kommunikationseinheit (12, 17) und der Bedieneinheit (11) über einen optischen Datenübertragungskanal (15, 27) durchgeführt wird.

## Beschreibung

Die Erfindung betrifft ein Verfahren zur Steuerung einer Maschine mittels einer insbesondere mobilen Bedieneinheit, bei dem ein Steuerbefehl, der von der Bedieneinheit an die Maschine übertragen wird, durch die Maschine ausgeführt wird, wenn sich die Bedieneinheit bei der Übertragung des Steuerbefehls in einem vorgegebenen Bereich relativ zu der Maschine befindet.

Ein solches Vorgehen wird zur maschinennahen, sicherheitsgerichteten Bedienung von Maschinen eingesetzt. Hierzu beinhalten die mobilen Bedieneinheiten entsprechende Sicherheitseinrichtungen, wie z.B. einen oder mehrere Zustimm-Taster und einen Not-Halt- oder STOP-Taster. Für die Einhaltung einer Sicherheitsvorschrift ist es erforderlich, eindeutig festzustellen, an welchem Ort sich ein die Bedieneinheit bedienender Bediener gerade befindet und wie seine Blickrichtung ist, d.h. ist der Blick dem Prozess zugewandt oder nicht. Beispielsweise ist das Bedienen einer Maschine bis zu einem Abstand von 5 m erlaubt. Bei einem größeren Abstand, bei dem beispielsweise kein Sichtkontakt der Maschine mehr gewährleistet ist, kann demgegenüber eine Bedienung nicht erfolgen. Häufig wird bei Überschreiten des maximalen Abstands die Maschine automatisch angehalten.

Bisher wurde ein maximaler Abstand zwischen dem Bediener und der Maschine dadurch begrenzt, dass die Länge einer Anschlussleitung, über die die Bedieneinheit zur Steuerung mit der Maschine verbunden ist, den Aktionsradius der Bedieneinheit festlegt. Die grobe Abgrenzung über die Kabellänge ist jedoch dann nicht ausreichend, wenn sichergestellt sein soll, ob der Bediener während eines Bedienvorganges Blickkontakt zur Maschine hat.

Die Sicherstellung der Einhaltung von Sicherheitsvorschriften wird weiter erschwert, wenn die Bedieneinheit über eine drahtlose Kommunikationsverbindung mit der Maschine kommuniziert. Zwar ist eine Ortung der Bedieneinheit über Triangulation beim Vorhandensein mehrerer Sende-/Empfangsstationen möglich, allerdings sind die hierbei erzielbaren Genauigkeiten für die sicherheitsgerichtete Bedienung teilweise nicht hoch genug.

Es besteht daher der Wunsch, eine Maschine mittels einer Bedieneinheit steuern zu können, wobei eine genaue Ortung der bedienenden Person bei der Verwendung der Bedieneinheit möglich ist. Insbesondere sollte hierbei auch überprüfbar sein, ob der Bediener während des gefahrbringenden Bedienvorganges Blickkontakt zur Maschine hat. Im Falle einer Unterbrechung des Blickkontaktes, beispielsweise durch das Kreuzen eines Gabelstaplers des in Sichtkontakt zur Maschine stehenden Bedieners, sollte ein Bedienvorgang nicht durchführbar sein oder automatisch unterbrochen werden. Gegebenenfalls kann dies mit einem Timeout relativiert werden.

Wenn in der Beschreibung von einer Maschine die Rede ist, so sind hierunter nicht nur die Maschine als Ganzes, sondern auch Teilkomponenten davon, wie z.B. Anlagenteile, zu verstehen.

Es ist Aufgabe der vorliegenden Erfindung, ein Verfahren und eine Vorrichtung zur Steuerung einer Maschine mittels einer Bedieneinheit anzugeben, welche die bekannten Vorgehensweisen funktional und/oder baulich verbessern.

Diese Aufgabe wird gelöst durch ein Verfahren gemäß den Merkmalen des Patentanspruches 1 und eine Vorrichtung gemäß den Merkmalen des Patentanspruches 19. Vorteilhafte Ausgestaltungen sind in den abhängigen Patentansprüchen wiedergegeben.

Bei dem vorgeschlagenen Verfahren zur Steuerung einer Maschine mittels einer Bedieneinheit wird ein Steuerbefehl, der von der Bedieneinheit an die Maschine übertragen wird, durch die Maschine ausgeführt, wenn sich die Bedieneinheit bei der Übertragung des Steuerbefehls in einem vorgegebenen Bereich relativ zu der Maschine befindet. Eine Bestimmung des Orts der Bedieneinheit relativ zu der Maschine erfolgt mittels einer Kommunikation, die zwischen zumindest einer optischen Kommunikationseinheit und der Bedieneinheit über einen optischen Datenübertragungskanal durchgeführt wird.

Das erfindungsgemäße Vorgehen basiert auf der Überlegung, dass eine Kommunikation zwischen der optischen Kommunikationseinheit und der Bedieneinheit nur dann möglich ist, wenn die zwischen diesen Komponenten gebildete Übertragungsstrecke einerseits eine bestimmte Länge nicht überschreitet und andererseits nicht durch einen anderen Gegenstand blockiert ist. Durch die vorgeschlagene "gerichtete Kommunikation" zwischen der Bedieneinheit und der Maschine kann somit alleine durch das Vorhandensein der Kommunikation zwischen den Komponenten festgestellt werden, ob sich die Bedieneinheit im Moment der Übertragung des Steuerbefehls in dem vorgegebenen Bereich relativ zu der Maschine befindet.

Durch das vorgeschlagene Vorgehen lässt sich eine hohe Genauigkeit bei der Ortsbestimmung der Bedieneinheit erzielen. Darüber hinaus weist das Verfahren eine geringe Störanfälligkeit (z. B. durch massive Metallgegenstände, die elektromagnetische Wellen reflektieren könnten) auf. Ebenso kann durch die gerichtete Kommunikation zwischen der Bedieneinheit und der optischen Kommunikationseinheit der Fall des erforderlichen Blickkontakts des Bedieners zur Maschine sichergestellt werden, dadurch, dass der optische Datenübertragungskanal, d.h. die Datenstrecke, nur bei einer bestimmten Positionierung der Bedieneinheit relativ zur Maschine sichergestellt ist. Würde sich der Bediener zusammen mit der Bedieneinheit mit dem Rücken zur Maschine drehen, so kann die optische Kommunikation zwischen der Bedieneinheit und der optischen Kommunikationseinheit nicht mehr erfolgen, weswegen auch die Ortsbestimmung der Bedieneinheit fehlschlägt. Infolgedessen wird dann ein von der Bedieneinheit an die Maschine übertragener Steuerbefehl durch diese nicht mehr ausgeführt.

Beispielsweise kann durch das vorgeschlagene Vorgehen die Maschine auch derart programmiert sein, dass bei einem Verlassen der Bedieneinheit des vorgegebenen Bereichs ein sicherer Zustand, z. B. Not-Halt der Maschine ausgelöst wird, da außerhalb des vorgegebenen Bereichs von der Bedieneinheit an die Maschine übertragene Befehle durch diese nicht empfangen werden können.

Gemäß einer Ausgestaltung wird der vorgegebene Bereich durch den Wirkbereich der optischen Kommunikationseinheit definiert. Der Wirkbereich der optischen Kommunikationseinheit kann beispielsweise derart relativ zu der Maschine angeordnet sein, dass dieser in einem definierten Sichtbereich der Maschine oder eines Maschinenteils ausgebildet ist.

Über den optischen Datenübertragungskanal kann ein dem Bereich zugeordneter Bereichskennzeichner übertragen werden, welcher durch die Bedieneinheit empfangen wird, wenn diese sich in dem vorgegebenen Bereich befindet. Beispielsweise kann dann die Bedieneinheit dazu ausgebildet sein, den Steuerbefehl nur dann an die Maschine übertragen zu können, wenn in der Bedieneinheit der Bereichskennzeichner vorliegt.

Ebenso kann vorgesehen sein, dass der Bereichskennzeichner zusammen mit dem Steuerbefehl von der Bedieneinheit an die Maschine übertragen wird, wobei durch die Maschine aus dem Empfang des Steuerbefehls und der diesen zugeordneten Bereichskennzeichnung auf die Anwesenheit der Bedieneinheit in dem vorgegebenen Bereich geschlossen wird. Die parallele Übertragung des Bereichskennzeichners zu dem Steuerbefehl signalisiert damit der Maschine, dass sich die Bedieneinheit in dem vorgegebenen Bereich befindet. Dementsprechend wird der von der Bedieneinheit empfangene Steuerbefehl in diesem Fall ausgeführt. Empfängt die Maschine hingegen den Steuerbefehl ohne parallel übertragenen Bereichskennzeichner, so signalisiert dies der Maschine, dass sich die Bedieneinheit nicht in dem vorgegebenen Bereich befindet und führt den Steuerbefehl nicht aus.

Zweckmäßig ist es hierbei, wenn der Bereichskennzeichner zyklisch ausgesendet wird. Hierdurch kann kontinuierlich festgestellt werden, ob sich die Bedieneinheit in dem vorgegebenen Bereich befindet oder nicht.

Gemäß einer weiteren Ausgestaltung wird der Bereichskennzeichner in Reaktion auf eine Anfrage, welche von der Bedieneinheit an die optische Kommunikationseinheit oder eine mit der optischen Kommunikationseinheit in Kommunikationsverbindung stehende Empfangseinheit übertragen wird, an die Bedieneinheit übertragen. Die Bedieneinheit fordert in dieser Ausgestaltung aktiv den Bereichskennzeichner von der optischen Kommunikationseinheit an, z.B. wenn diese den Steuerbefehl an die Maschine übertragen möchte.

In einer weiteren Ausgestaltung kann der Maschine eine Mehrzahl an vorgegebenen Bereichen zugeordnet sein. Dabei können zwei vorgegebene Bereiche überlappend oder nicht überlappend ausgebildet sein. Die zwei Bereiche können wahlweise dem gleichen Bereichskennzeichner oder unterschiedlichen Bereichskennzeichnern zugeordnet sein.

Ein jeweiliger vorgegebener Bereich kann beispielsweise durch Strahlformung und/oder durch Blenden erzeugt sein. Hierdurch ist es möglich, genau definierte Bereiche auszubilden, in denen eine Kommunikation zwischen der Bedieneinheit und der optischen Kommunikationseinheit zur Bedienung der Maschine möglich sein soll.

Ein jeweiliger vorgegebener Bereich kann durch eine oder mehrere optische Kommunikationseinheiten erzeugt sein. Erstreckt sich einer der Bereiche beispielsweise über eine Fläche, welche von einer einzelnen Kommunikationseinheit nicht abgedeckt werden kann, oder ist der Bereich gegebenenfalls durch bestimmte Komponenten verschattet, so kann ein Bereich (mit gleichem Bereichskennzeichner) durch eine Mehrzahl an optischen Kommunikationseinheiten erzeugt sein.

Ein vorgegebener Bereich kann durch Strahlung einer vorgegebenen Wellenlänge oder eines vorgegebenen Wellenlängenbereichs ausgebildet sein. Ebenso kann durch eine optische Kommunikationseinheit zur Ausbildung unterschiedlicher Bereiche Licht unterschiedlicher Wellenlängen oder unterschiedlicher, nicht überlappender Wellenlängenbereiche ausgesendet werden. Beispielsweise wird dann durch eine jeweilige Wellenlänge oder einen Wellenlängenbereich ein bestimmter Bereichskennzeichner ausgebildet bzw. repräsentiert.

Gemäß einer weiteren Ausgestaltung wird ein jeweiliger vorgegebener Bereich durch Licht im sichtbaren Bereich ausgebildet. Dies weist den Vorteil auf, dass für den Bediener der Bedieneinheit jederzeit erkennbar ist, ob er sich in dem vorgegebenen Bereich oder außerhalb davon befindet. Eine weiter verbesserte Orientierungsmöglichkeit für den Bediener ergibt sich dann, wenn ein jeweiliger vorgegebener Bereich durch farbiges Licht ausgebildet wird, wobei benachbarte Bereiche durch unterschiedliche Lichtfarben ausgebildet werden. Hier ist für den Bediener der Bedieneinheit unmittelbar erkennbar, in welchem Bereich, beispielsweise unmittelbar aneinandergrenzender oder sich sogar überlappender Bereiche, er sich befindet, um die den jeweiligen Bereichen zugeordneten Maschinenteile bedienen zu können.

Ebenso kann vorgesehen sein, dass ein jeweiliger vorgegebener Bereich durch Strahlung im nichtsichtbaren Bereich ausgebildet wird.

Der Steuerbefehl und/oder andere Daten können über einen nicht optischen Datenübertragungskanal an die Maschine übertragen werden. Beispielsweise kann hierzu jede drahtlose Kommunikationstechnologie, wie z.B. IWLAN (Industrial Wireless Local Area Network), WLAN und dergleichen eingesetzt werden. Sofern eine Leitungsverbindung zwischen der Bedieneinheit und der Maschine besteht, kann die Übertragung des Steuerbefehls und/oder der anderen Daten auch leitungsgebunden erfolgen.

Ebenso kann vorgesehen sein, den Steuerbefehl und/oder andere Daten über den optischen Datenübertragungskanal an die Maschine zu übertragen. Die optische Kommunikationseinheit ist in diesem Fall nicht nur zum Aussenden von Daten, wie z.B. des Bereichskennzeichners, ausgebildet, sondern umfasst ebenfalls eine Empfangseinheit. Gleichfalls ist in der Bedieneinheit nicht nur eine optische Empfangseinheit, sondern auch eine Einheit zum Aussenden optischer Signale enthalten, wodurch eine bidirektionale Datenübertragung ermöglicht ist.

Ebenso kann eine Mischkommunikation erfolgen, so dass ein Teil des Steuerbefehls und/oder der anderen Daten über den optischen Datenübertragungskanal und ein anderer Teil über den nicht optischen Datenübertragungskanal übertragen werden.

Die Übertragung des Steuerbefehls und/oder der anderen Daten kann mit einem beliebigen Protokoll, insbesondere mit einem Protokoll einer auf drahtgebundener oder drahtloser Kommunikationstechnologie erfolgen. Im industriellen Umfeld werden beispielsweise ProfiBus, PROFINET oder Ethernet eingesetzt. Von besonderer Bedeutung ist hierbei, dass die Bedieneinheit bei Verwendung spezieller industrieller Protokolle keine besonderen Hardware-Schnittstellen aufzuweisen braucht, wenn diese über den optischen Datenübertragungskanal übertragen werden. Stattdessen werden entsprechende Treiber in der Bedieneinheit implementiert, welche das entsprechend verwendete Protokoll verarbeiten können.

Die Erfindung schlägt weiter eine Vorrichtung zur Steuerung einer Maschine mittels einer Bedieneinheit vor, bei der ein Steuerbefehl, der von der Bedieneinheit an die Maschine übertragbar ist, durch die Maschine ausführbar ist, wenn sich die Bedieneinheit bei der Übertragung des Steuerbefehls in einem vorgegebenen Bereich relativ zu der Maschine befindet. Hierbei erfolgt eine Bestimmung des Orts der Bedieneinheit mittels einer Kommunikation, die zwischen zumindest einer optischen Kommunikationseinheit und der Bedieneinheit über einen optischen Datenübertragungskanal durchführbar ist. Die erfindungsgemäße Vorrichtung weist die gleichen Vorteile auf, wie diese vorstehend in Verbindung mit dem erfindungsgemäßen Verfahren beschrieben wurden. Darüber hinaus kann die Vorrichtung weitere Mittel zur Durchführung besonderer Ausgestaltungsvarianten des beschriebenen Verfahrens umfassen.

Die Erfindung wird nachfolgend näher anhand eines Ausführungsbeispiels in der Zeichnung erläutert. Es zeigen:
- FIG 1: eine schematische Darstellung einer erfindungsgemäßen Vorrichtung, und
- FIG 2: eine Draufsicht auf das Umfeld einer mittels einer Bedieneinheit zu bedienenden Maschine, in der in erfindungsgemäßer Weise verschiedene Bereich zur Bedienung der Maschine ausgebildet sind.

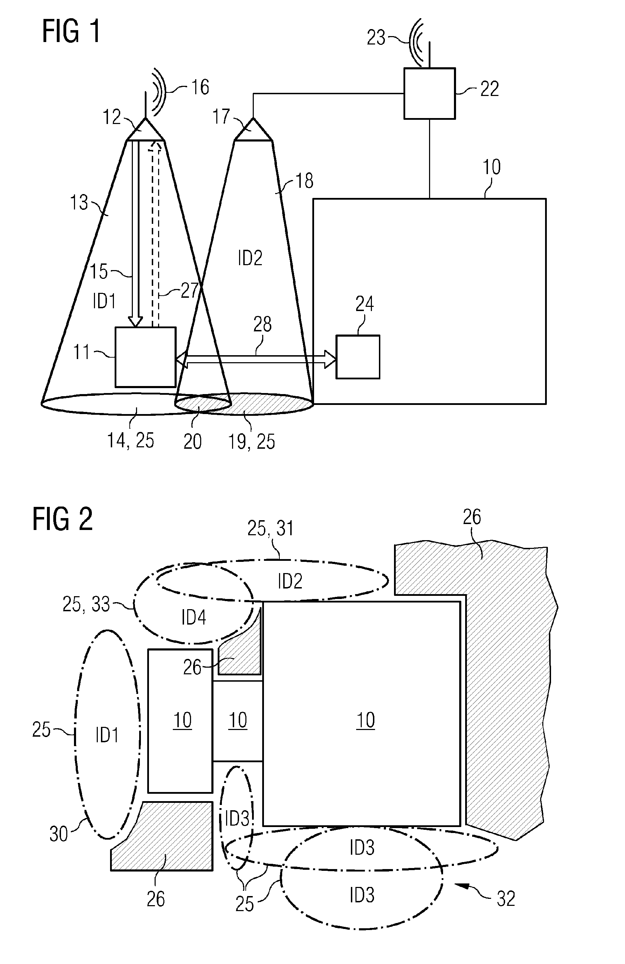

FIG 1 zeigt eine schematische Darstellung einer erfindungsgemäßen Vorrichtung zur Steuerung einer Maschine 10 mittels einer Bedieneinheit 11. Bei der Maschine 10 kann es sich beispielsweise um eine Fertigungsanlage mit Greifern, Roboterarmen, Förderbändern und dergleichen handeln. Diese einzelnen Anlagenteile werden aufgrund ihrer räumlichen Anordnung und/oder Ausdehnung von unterschiedlichen Bereichen aus über die Bedieneinheit 11 bedient.

Die Bedieneinheit 11 umfasst in einer nicht näher dargestellten Weise ein Bedienmittel, wie z.B. Zustimm-Taster oder Not-Halt-Taster. Darüber hinaus kann die Bedieneinheit weitere Bedienelemente, wie z.B. eine Tastatur, ein Touch-Screen usw. aufweisen. Ebenso kann optional ein Display oder eine Mehrzahl von Leuchten vorgesehen sein, um den Bediener der Bedieneinheit einen bestimmten Zustand und dergleichen zu signalisieren.

Wie bei industriellen Anlagen üblich, wird ein Steuerbefehl für die Maschine oder ein bestimmtes Anlagenteil, der von der Bedieneinheit 11 an die Maschine 10 übertragen wird, durch die Maschine 10 nur dann ausgeführt, wenn sich die Bedieneinheit 11 bei der Übertragung des Steuerbefehls in einem vorgegebenen Bereich relativ zu der Maschine befindet. Je nach Größe und Komplexität der Maschine kann hierbei eine Mehrzahl an vorgegebenen Bereichen 25 ausgebildet sein. Jeder der Bereiche 25 ist beispielsweise einem bestimmten Anlagenteil zugeordnet. Für die Entscheidung, ob der von der Maschine empfangene Steuerbefehl durch die Maschine ausgeführt wird oder nicht, ist es daher erforderlich, den Ort der Bedieneinheit 11 und damit des Bedieners im Moment der Übertragung festzustellen. Dies gilt insbesondere dann, wenn ein bestimmtes Anlagenteil gesteuert oder bedient werden soll.

Die Ortsbestimmung erfolgt mittels einer Kommunikation, die zwischen einer optischen Kommunikationseinheit und der Bedieneinheit 11 über einen optischen Datenübertragungskanal durchgeführt wird. Eine solche Kommunikation ist beispielsweise unter dem Begriff des "optischen WLAN" bekannt. Das Prinzip basiert darauf, beispielsweise an der Decke eines Gebäudes und/oder an Wänden oder anderen Bereichen des Gebäudes einen oder mehrere optische Kommunikationseinheiten (im Ausführungsbeispiel sind dies zwei Kommunikationseinheiten 12, 17) anzuordnen, so dass eine in deren Sende-/Empfangsbereich 13, 18 befindliche Empfangseinheit, hier die Bedieneinheit 11, Daten von der optischen Kommunikationseinheit 12 und/oder 17 empfangen kann.

Die optischen Kommunikationseinheiten 12, 17 sind, sofern eine monodirektionale Übertragung vorgesehen ist, beispielsweise LED-Lampen oder andere optische Lichtquellen. Im Falle einer bidirektionalen Übertragung handelt es sich bei den optischen Kommunikationseinheiten 12, 17 um optische Sende-/Empfangseinheiten. Es können ebenso bereits vorhandene Lampen, z.B. LED-Lampen, für die Datenübertragung verwendet werden.

Wie aus der schematischen Darstellung der FIG 1 hervorgeht, wird durch den Abstrahlbereich einer jeweiligen optischen Kommunikationseinheit 12, 17 ein Empfangsbereich 13 bzw. 18 für die Bedieneinheit 11 ausgebildet. Treffen die von der optischen Kommunikationseinheit 12, 17 ausgesendeten elektromagnetischen Strahlen auf den Boden, so ergibt sich der schematisch mit dem Bezugszeichen 25 gekennzeichnete vorgegebene (Bedien-)Bereich. Der durch die optische Kommunikationseinrichtung 12 ausgebildete Bereich 13 (d.h. der vorgegebene Bereich) ist mit dem Bezugszeichen 14 gekennzeichnet. Der durch die optische Kommunikationseinrichtung 17 ausgebildete (vorgegebene) Bereich mit dem Bezugszeichen 19 versehen.

Die geometrische Abstrahlcharakteristik einer jeweiligen optischen Kommunikationseinrichtung 12, 17 kann einerseits durch deren Anordnung im Raum und andererseits durch Strahlformungsmittel, wie z.B. Blenden, Linsen oder Spiegel, erzeugt werden.

Mit Hilfe der optischen Kommunikationseinheiten 12, 17 und den von diesen erzeugten Bereichen 14, 19 ist es möglich, den Standort der Bedieneinheit 11 während eines Bedienvorganges zu ermitteln. Wie in FIG 1 gezeigt, wird im nachfolgenden Ausführungsbeispiel davon ausgegangen, dass sich die Bedieneinheit 11 im Sende-/Empfangsbereich 13 der optischen Kommunikationseinheit 12 befindet. Für die Ortsbestimmung ist es hierbei ausreichend, wenn die optische Kommunikationseinrichtung 12 lediglich als Sendeeinheit ausgebildet ist. Beispielsweise wird durch die optische Kommunikationseinheit 12 ein Bereichskennzeichner ID1 zyklisch ausgestrahlt, welcher durch die Bedieneinheit 11 empfangen wird, wenn sich diese im Sendebereich 13 der optischen Kommunikationseinheit 12 befindet. Der Bereichskennzeichner ID1 kann dann von der Bedieneinheit 11 zusammen mit einem Steuerbefehl an die Maschine 10 übertragen werden. Der parallele Empfang des Bereichskennzeichners ID1 und des Steuerbefehls signalisiert der Maschine 10, dass sich die Bedieneinheit 11 in dem vorgegebenen Bereich 14 befindet. Dementsprechend wird der Steuerbefehl ausgeführt. Wird ein und derselbe Steuerbefehl für unterschiedliche Maschinenteile verwendet, so kann anhand des Bereichskennzeichners durch die Maschine ermittelt werden, von welchem Bereich aus der Steuerbefehl erzeugt wurde und dann den dem vorgegebenen Bereich 14 zugeordneten Anlagenteil entsprechend steuern.

Die Übertragung des Steuerbefehls und gegebenenfalls weiterer Daten von der Bedieneinheit 11 an die Maschine 10 kann z.B. über einen von dem optischen Datenübertragungskanal 15 unterschiedlichen Datenübertragungskanal 28 erfolgen. Hierzu kann beispielsweise eine drahtlose Kommunikationsverbindung, basierend auf WLAN oder IWLAN, zwischen der Bedieneinheit 11 und der Maschine 10 genutzt werden. Ebenso kann eine drahtbehaftete Kommunikation erfolgen, wenn die Bedieneinheit 11 über ein Kabel mit der Maschine 10 verbunden ist.

In einer anderen Ausgestaltung könnte der optische Datenübertragungskanal 15 einen Rückkanal 27 aufweisen, so dass eine Nutzdatenübertragung von der Bedieneinheit 11 an die Maschine 10 auch über die optische Kommunikationseinrichtung 12 erfolgen könnte. Hierzu ist die optische Kommunikationseinheit 12 dann als Sende-/Empfangseinheit ausgebildet.

Die optischen Kommunikationseinheiten 12, 17 ihrerseits können wiederum drahtgebunden (Kommunikationseinheit 17) oder drahtlos (Kommunikationseinheit 12) mit einer Steuereinheit oder einem Rechner 22 kommunizieren. Entsprechende drahtlose Kommunikationseinrichtungen 16, 23 der Kommunikationseinheit 12 und des Rechners 22 sind mit den Bezugszeichen 16 und 23 gekennzeichnet. Der Rechner 22 kann optional wiederum mit der Maschine 10 gekoppelt sein. Ebenso kann der Rechner 22 Bestandteil der Maschine 10 sein. Mit dem Bezugszeichen 24 ist eine Kommunikationseinheit der Maschine 10 dargestellt, sofern eine Kommunikation über den nicht-optischen Datenübertragungskanal erfolgt.

Während die optische Kommunikationseinheit 12 den Bereichskennzeichner ID1 aussendet, sendet im Ausführungsbeispiel die Kommunikationseinheit 17 den Bereichskennzeichner ID2 aus. Die von den optischen Kommunikationseinheiten 12, 17 definierten Bereiche 14, 19 überlappen im Ausführungsbeispiel, wobei der Überlappungsbereich mit dem Bezugszeichen 20 gekennzeichnet ist. Befindet sich die Bedieneinheit 11 in diesem Überlappungsbereich 20, so können Steuerbefehle für beide definierte Bereiche 14, 19 an die Maschine 10 übertragen werden. Befindet sich die Bedieneinheit 11 außerhalb des Überlappungsbereichs 20 in dem definierten Bereich 19, so können nur für den definierten Bereich 19 gültige Steuerbefehle an die Maschine 10 übertragen und durch diese ausgeführt werden.

Erfolgt eine bidirektionale Kommunikation zwischen einer der Kommunikationseinheiten 12, 17 und der Bedieneinheit 11, so kann die Kommunikation lediglich dann erfolgen, wenn sich die Bedieneinheit 11 im Sendebereich 13 bzw. 18 der jeweiligen Kommunikationseinheit 12, 17 befindet. Dies bringt den Vorteil mit sich, dass beispielsweise bereits dann eine Kommunikationsunterbrechung auftritt, wenn sich beispielsweise ein Gabelstapler oder ein anderes Objekt zwischen der Bedieneinheit 11 und der Kommunikationseinheit 12 bzw. 17 befindet. Ebenso kann eine Kommunikation und damit auch ein Empfang des entsprechenden Bereichskennzeichners ID1, ID2 nicht mehr erfolgen, wenn sich der Bediener beispielsweise mit dem Rücken zu der Maschine 10 befindet.

FIG 2 zeigt ein schematisches Ausführungsbeispiel einer erfindungsgemäßen Vorrichtung von oben. Die erfindungsgemäße Vorrichtung weist verschiedene Bereiche 25 auf, aus denen heraus eine Bedienung der Maschine bzw. von Maschinenteilen möglich sein soll. Mit dem Bezugszeichen 26 sind solche Bereiche gekennzeichnet, aus denen heraus keine Bedienung erlaubt sein soll. Vier unterschiedlichen Bereichen 30, 31, 32, 33 sind vier Bereichskennzeichner ID1, ID2, ID3 und ID4 zugeordnet. Ein Bereich 30 mit dem Bereichskennzeichner ID1 wird dabei von einer einzigen, in FIG 2 nicht dargestellten Kommunikationseinheit erzeugt. Die elliptische Gestalt des Bereichs 30 kann z.B. durch Strahlformungsmethoden und Blenden erzeugt sein. Der Bereich 31 mit dem Bereichskennzeichner ID2 überlappt mit einem Bereich 33 mit dem Bereichskennzeichner ID4. Im Überlappungsbereich kann dabei, wie bereits beschrieben, sowohl eine Steuerung der dem Bereich 31 als auch der dem Bereich 33 zugeordneten Maschinenteile erfolgen. Der Bereich 32 ist durch insgesamt drei optische Kommunikationseinheiten erzeugt. Durch die Anzahl der optischen Kommunikationseinheiten kann eine mehr oder minder beliebig komplexe Gestalt des vorgegebenen Bereichs 32 erzielt werden.

Nachfolgend werden weitere Ausgestaltungsvarianten beschrieben. Mit Hilfe der optischen Übertragungsstrecke zwischen der Bedieneinheit 11 und einer oder mehreren optischen Kommunikationseinheiten kann ein Signal übermittelt werden, welches zur Auswertung des Standorts herangezogen wird. Neben der zyklischen Aussendung eines Bereichskennzeichners kann auch eine aktive Anfrage nach dem Bereichskennzeichner durch die Bedieneinheit 11 erfolgen. Insbesondere kann durch die aktive Abfrage sichergestellt werden, ob ein Sichtkontakt zwischen der Bedieneinheit 11 und einer optischen Kommunikationseinheit 12, 17 besteht. Solange der Sichtkontakt zwischen der Bedieneinheit 11 und der optischen Kommunikationseinheit besteht, kann dann über die Bedieneinheit bedient werden. Geht der Sichtkontakt, d.h. die Übertragungsstrecke, verloren, wird die Bedienung über die Bedieneinheit gesperrt und es kann beispielsweise durch den Bediener nur noch beobachtet werden. Gegebenenfalls kann das Sperren von sicherheitsrelevanten Bedienoptionen über einen zusätzlichen Timeout, verbunden mit einer Dialogmeldung, ergänzt werden, so dass dem Bediener nach Verlassen des optischen Empfangsbereichs eine definierte Zeit verbleibt, um in diesen zurückzukehren, ohne das Bedienrecht zu verlieren.

Das vorgeschlagene Vorgehen ersetzt die bisherige aktive Überwachung eines definierten Bereichs mit Hilfe von Transpondern, die aufgrund von metallischen Reflexionen von Funkwellen in einer großen Maschine bzw. Anlage gegebenenfalls nicht einsetzbar sind. Darüber hinaus weisen Transponder eine begrenzte Reichweite auf.

Die Nutzung des optischen Datenübertragungskanals für die Nutzdatenübertragung ermöglicht die Nutzung jedes beliebigen Protokolls. Beispielsweise können Informationen über einen optischen ProfiBUS oder Echtzeitkommunikation über optisches PROFINET bis hin zur Übertragung von sicherheitsrelevanten Daten über ProfiSAFE realisiert werden. Vorteil hierbei ist, dass am Bediengerät nur eine Schnittstelle (die optische Schnittstelle) vorhanden sein muss. Für die Durchführung des jeweiligen Protokolls werden keine Hardware-Schnittstellen benötigt, wie z.B. separate Anschlüsse fürs Ethernet, ProfiBUS, CAN-Bus, Ethercat oder RFID. Die Bedieneinheit muss lediglich über den Treiber für das verwendete Protokoll verfügen.

Ein weiterer Vorteil des beschriebenen Vorgehens besteht darin, dass eine Funkfeldplanung entfallen kann. Dies ist möglich, da keine Überlappungen bzw. nur definierte Überlappungen im "Empfangsfeld" der Bedieneinheit vorhanden sind und Störungen durch andere Teilnehmer, wie diese häufig im Bereich drahtloser Kommunikationsnetze auftreten, ausgeschlossen sind. Beispielsweise lässt sich die Definition des Empfangsbereichs beim beschriebenen optischen Verfahren leichter durchführen als beim Verfahren über elektromagnetische Funkwellen. Außerdem kann mit der Vorgehensweise nicht nur ein zweidimensionaler Empfangsraum (wie z.B. über WLAN) definiert werden. Es ist eine Definition eines dreidimensionalen Empfangsraums möglich, da die optischen Signale nicht durch Decken, Böden und Wände hindurch gesendet werden können. Damit können in unterschiedlichen Räumen oder Stockwerken auch unterschiedlich definierte Empfangsbereiche ausgebildet werden.

Das vorgeschlagene Vorgehen ermöglicht den Ersatz von RFID-Technik oder Nahfeldkommunikation (NFC, Near Field Communication). Während bislang ein Datenaustausch im Nahfeld über RFID oder NFC durchgeführt wurde, können mit Hilfe des optischen Verfahrens zur Datenübertragung auch anlagenspezifische Informationen auf die Bedieneinheit geladen werden.

Neben einer digitalen optischen Kanaltrennung zur Verwendung mehrerer optischer Systeme können durch die Verwendung verschiedener Wellenlängen im sichtbaren und im nicht-sichtbaren Bereich mehrere, unabhängige optische Kommunikationseinheiten gleichzeitig im selben Bereich verwendet werden, ohne sich gegenseitig zu stören.

Ein weiterer Vorteil besteht darin, dass Industriespionage erschwert und eine Trennung von Bedienbereichen im Gegensatz zu Funkwellen-Verfahren, wie z. B. IWLAN verschärft wird, da die optischen Signale Wände, Decken und andere Barrieren nicht durchdringen. Ebenso ist die Möglichkeit, über die optische Kommunikationsschnittstelle Viren einspeisen oder eine DOS (Denial of Service)-Attacke durchzuführen stark reduziert. Hierzu ist es erforderlich, dass sich ein Angreifer im Empfangsbereich der optischen Kommunikationseinheit befindet. Eine Kommunikation, wie beispielsweise bei einem drahtlosen WLAN, von außerhalb des Gebäudes oder Werksbereichs ist nicht möglich.

Für eine flexible temporäre Anlagenerweiterung kann die optische Kommunikationseinheit Daten über andere Datenübertragungskanäle mit der Maschine oder einem anderen Rechner austauschen. Dies kann wahlweise drahtgebunden oder drahtlos erfolgen. Diese Schnittstelle kann dann beispielsweise auch für einen Einrichtbetrieb oder eine Störungsbehebung genutzt werden.

Durch das beschriebene Vorgehen ergibt sich eine flexible Definition des Empfangsraums, eine hohe Störunanfälligkeit und eine hohe Genauigkeit bezüglich der Bedienung der Maschine. Das vorgeschlagene Vorgehen kann beispielsweise auch zur Ortung von Field PGs und zur Navigation in einer Anlage für Service-Einsätze verwendet werden. Es ist eine einfache Erfassung und Einarbeitung von Änderungen oder Erweiterungen in der Anlage, z.B. durch WLAN-fähige optische Übertrager, möglich. Schließlich ist eine einfache Umsetzung der Datenübertragung in einem Glasfasernetz möglich.

## Patentansprüche

1. Verfahren zur Steuerung einer Maschine (10) mittels einer Bedieneinheit (11), bei dem ein Steuerbefehl, der von der Bedieneinheit (11) an die Maschine (10) übertragen wird, durch die Maschine (10) ausgeführt wird, wenn sich die Bedieneinheit (11) bei der Übertragung des Steuerbefehls in einem vorgegebenen Bereich (25) relativ zu der Maschine (10) befindet, wobei eine Bestimmung des Orts der Bedieneinheit (11) relativ zu der Maschine (10) mittels einer Kommunikation erfolgt, die zwischen zumindest einer optischen Kommunikationseinheit (12, 17) und der Bedieneinheit (11) über einen optischen Datenübertragungskanal (15, 27) durchgeführt wird.

2. Verfahren nach einem der vorhergehenden Ansprüche, bei dem der vorgegebene Bereich (25) durch den Sendebereich der optischen Kommunikationseinheit (12, 17) definiert wird.

3. Verfahren nach Anspruch 1 oder 2, bei dem über den optischen Datenübertragungskanal (15, 27) ein dem Bereich (25) zugeordneter Bereichskennzeichner (ID1, .., ID4) übertragen wird, welcher durch die Bedienheit empfangen wird, wenn diese sich in dem vorgegebenen Bereich (25) befindet.

4. Verfahren nach Anspruch 3, bei dem der Bereichskennzeichner (ID1, .., ID4) zusammen mit dem Steuerbefehl von der Bedieneinheit (11) an die Maschine (10) übertragen wird, wobei durch die Maschine (10) aus dem Empfang des Steuerbefehls und der diesem zugeordneten Bereichskennzeichner (ID1, .., ID4) auf die Anwesenheit der Bedieneinheit (11) in dem vorgegeben Bereich (25) geschlossen wird.

5. Verfahren nach Anspruch 3 oder 4, bei dem der Bereichskennzeichner (ID1, .., ID4) zyklisch ausgesendet wird.

6. Verfahren nach einem der Ansprüche 3 bis 5, bei dem der Bereichskennzeichner (ID1, .., ID4) in Reaktion auf eine Anfrage, welche von der Bedieneinheit (11) an die optische Kommunikationseinheit (12, 17) oder eine mit der optischen Kommunikationseinheit (12, 17) in Kommunikationsverbindung stehende Empfangseinheit (22; 24) übertragen wird, an die Bedieneinheit (11) übertragen wird.

7. Verfahren nach einem der vorhergehenden Ansprüche, bei dem der Maschine (10) eine Mehrzahl an vorgegebenen Bereichen (25) zugeordnet ist.

8. Verfahren nach Anspruch 7, bei dem zwei vorgegebene Bereiche (25) überlappend oder nicht überlappend ausgebildet sind.

9. Verfahren nach einem der vorhergehenden Ansprüche, bei dem ein jeweiliger vorgegebener Bereich (25) durch Strahlformung und/oder durch Blenden erzeugt wird.

10. Verfahren nach einem der vorhergehenden Ansprüche, bei dem ein jeweiliger vorgegebener Bereich (25) durch eine oder mehrere optische Kommunikationseinheiten (12, 17) erzeugt wird.

11. Verfahren nach einem der vorhergehenden Ansprüche, bei dem ein vorgegebener Bereich (25) durch Strahlung einer vorgegebenen Wellenlänge oder eines vorgegebenen Wellenlängenbereichs ausgebildet wird.

12. Verfahren nach einem der vorhergehenden Ansprüche, bei dem durch eine optische Kommunikationseinheit (12, 17) zur Ausbildung unterschiedlicher Bereiche (25) Strahlung unterschiedlicher Wellenlängen oder unterschiedlicher, nicht überlappender Wellenlängenbereiche ausgesendet wird.

13. Verfahren nach einem der vorhergehenden Ansprüche, bei dem ein jeweiliger vorgegebener Bereich (25) durch Strahlung im sichtbaren Bereich (25) ausgebildet wird.

14. Verfahren nach Anspruch 13, bei dem ein jeweiliger vorgegebener Bereich (25) durch farbiges Licht ausgebildet wird, wobei benachbarte Bereiche (25) durch unterschiedliche Lichtfarben ausgebildet werden.

15. Verfahren nach einem der vorhergehenden Ansprüche, bei dem ein jeweiliger vorgegebener Bereich (25) durch Strahlung im unsichtbaren Bereich (25) ausgebildet wird.

16. Verfahren nach einem der vorhergehenden Ansprüche, bei dem der Steuerbefehl und/oder andere Daten über einen nicht optischen Datenübertragungskanal an die Maschine (10) übertragen werden.

17. Verfahren nach einem der vorhergehenden Ansprüche, bei dem der Steuerbefehl und/oder andere Daten über den optischen Datenübertragungskanal (15, 27) an die Maschine (10) übertragen werden.

18. Verfahren nach Anspruch 17, bei dem die Übertragung des Steuerbefehls und/oder der anderen Daten mit einem Protokoll einer auf drahtgebundener oder drahtloser Kommunikationstechnologie erfolgt.

19. Vorrichtung zur Steuerung einer Maschine (10) mittels einer Bedieneinheit (11), bei dem ein Steuerbefehl, der von der Bedieneinheit (11) an die Maschine (10) übertragbar ist, durch die Maschine (10) ausgeführbar ist, wenn sich die Bedieneinheit (11) bei der Übertragung des Steuerbefehls in einem vorgegebenen Bereich (25) relativ zu der Maschine (10) befindet, wobei eine Bestimmung des Orts der Bedieneinheit (11) mittels einer Kommunikation erfolgt, die zwischen zumindest einer optischen Kommunikationseinheit (12, 17) und der Bedieneinheit (11) über einen optischen Datenübertragungskanal durchgeführbar ist.

## Geänderte Patentansprüche

### Geänderte Patentansprüche gemäss Regel 137(2) EPÜ.

**1.** Verfahren zur Steuerung einer Maschine (10) mittels einer Bedieneinheit (11), bei dem ein Steuerbefehl, der von der Bedieneinheit (11) an die Maschine (10) übertragen wird, durch die Maschine (10) ausgeführt wird, wenn sich die Bedieneinheit (11) bei der Übertragung des Steuerbefehls in einem vorgegebenen Bereich (25) relativ zu der Maschine (10) befindet, **dadurch gekennzeichnet, dass** eine Bestimmung des Orts der Bedieneinheit (11) relativ zu der Maschine (10) mittels einer Kommunikation erfolgt, die zwischen zumindest einer optischen Kommunikationseinheit (12, 17) und der Bedieneinheit (11) über einen optischen Datenübertragungskanal (15, 27) durchgeführt wird, wobei durch die zumindest eine optische Kommunikationseinheit (12, 17) zur Ausbildung unterschiedlicher Bereiche (25) Strahlung unterschiedlicher Wellenlängen oder unterschiedlicher, nicht überlappender Wellenlängenbereiche ausgesendet wird.

**2.** Verfahren nach einem der vorhergehenden Ansprüche, bei dem der vorgegebene Bereich (25) durch den Sendebereich der optischen Kommunikationseinheit (12, 17) definiert wird.

**3.** Verfahren nach Anspruch 1 oder 2, bei dem über den optischen Datenübertragungskanal (15, 27) ein dem Bereich (25) zugeordneter Bereichskennzeichner (ID1, .., ID4) übertragen wird, welcher durch die Bedienheit empfangen wird, wenn diese sich in dem vorgegebenen Bereich (25) befindet.

**4.** Verfahren nach Anspruch 3, bei dem der Bereichskennzeichner (ID1, .., ID4) zusammen mit dem Steuerbefehl von der Bedieneinheit (11) an die Maschine (10) übertragen wird, wobei durch die Maschine (10) aus dem Empfang des Steuerbefehls und der diesem zugeordneten Bereichskennzeichner (ID1, .., ID4) auf die Anwesenheit der Bedieneinheit (11) in dem vorgegeben Bereich (25) geschlossen wird.

**5.** Verfahren nach Anspruch 3 oder 4, bei dem der Bereichskennzeichner (ID1, .., ID4) zyklisch ausgesendet wird.

**6.** Verfahren nach einem der Ansprüche 3 bis 5, bei dem der Bereichskennzeichner (ID1, .., ID4) in Reaktion auf eine Anfrage, welche von der Bedieneinheit (11) an die optische Kommunikationseinheit (12, 17) oder eine mit der optischen Kommunikationseinheit (12, 17) in Kommunikationsverbindung stehende Empfangseinheit (22; 24) übertragen wird, an die Bedieneinheit (11) übertragen wird.

**7.** Verfahren nach einem der vorhergehenden Ansprüche, bei dem der Maschine (10) eine Mehrzahl an vorgegebenen Bereichen (25) zugeordnet ist.

**8.** Verfahren nach Anspruch 7, bei dem zwei vorgegebene Bereiche (25) überlappend oder nicht überlappend ausgebildet sind.

**9.** Verfahren nach einem der vorhergehenden Ansprüche, bei dem ein jeweiliger vorgegebener Bereich (25) durch Strahlformung und/oder durch Blenden erzeugt wird.

**10.** Verfahren nach einem der vorhergehenden Ansprüche, bei dem ein jeweiliger vorgegebener Bereich (25) durch eine oder mehrere optische Kommunikationseinheiten (12, 17) erzeugt wird.

**11.** Verfahren nach einem der vorhergehenden Ansprüche, bei dem ein vorgegebener Bereich (25) durch Strahlung einer vorgegebenen Wellenlänge oder eines vorgegebenen Wellenlängenbereichs ausgebildet wird.

**12.** Verfahren nach einem der vorhergehenden Ansprüche, bei dem ein jeweiliger vorgegebener Bereich (25) durch Strahlung im sichtbaren Bereich (25) ausgebildet wird.

**13.** Verfahren nach Anspruch 12, bei dem ein jeweiliger vorgegebener Bereich (25) durch farbiges Licht ausgebildet wird, wobei benachbarte Bereiche (25) durch unterschiedliche Lichtfarben ausgebildet werden.

**14.** Verfahren nach einem der vorhergehenden Ansprüche, bei dem ein jeweiliger vorgegebener Bereich (25) durch Strahlung im unsichtbaren Bereich (25) ausgebildet wird.

**15.** Verfahren nach einem der vorhergehenden Ansprüche, bei dem der Steuerbefehl und/oder andere Daten über einen nicht optischen Datenübertragungskanal an die Maschine (10) übertragen werden.

**16.** Verfahren nach einem der vorhergehenden Ansprüche, bei dem der Steuerbefehl und/oder andere Daten über den optischen Datenübertragungskanal (15, 27) an die Maschine (10) übertragen werden.

**17.** Verfahren nach Anspruch 16, bei dem die Übertragung des Steuerbefehls und/oder der anderen Daten mit einem Protokoll einer auf drahtgebundener oder drahtloser Kommunikationstechnologie erfolgt.
